# EUROPEAN PATENT APPLICATION

(11) **EP 3 072 593 A1**
(43) Date of publication of application: **28.09.2016**
(21) Application number: 13897770.7
(22) Date of filing: 21.11.2013
(51) Int. Cl.: B01J 41/04, C22B 3/42, C22B 34/22, C22B 34/32

(54) **METHOD FOR SEPARATING ELEMENTS, AND SEPARATION SYSTEM**

(71) Applicant: Hitachi, Ltd., Chiyoda-ku Tokyo 100-8280 (JP)
(72) Inventor: HATANO Ayumi, Tokyo 100-8280 (JP); YAMAMOTO Hiroki, Tokyo 100-8280 (JP); NAKANO Hiroshi, Tokyo 100-8280 (JP)
(74) Representative: Beetz & Partner mbB
(86) International application number: PCT/JP2013/081387
(87) International publication number: WO 2015/075798

(57) **Abstract**

Provided are an element separating method and an element separation system by which the amount of waste liquid can be reduced while maintaining the performance of separation of a target element. The element separating method of the present invention includes: (1) a first step 2 of adjusting the oxidation-reduction potential of a solution containing the target element to a potential at which the polarity of only a chemical species containing the target element can be converted; and (2) a second step 3 of introducing the oxidation-reduction potential-adjusted solution to an ion absorption body, and causing only either one of the polarity-converted chemical species containing the target element and a chemical species of an impurity element in the solution to be selectively adsorbed on the ion absorption body, the target element being separated from the solution.

## Description

### Technical Field

The present invention relates to a separating method for elements and a separation system for elements in which an ion absorption body is used.

### Background Art

A separating and recovering method by use of an ion adsorbing body such as an ion exchange resin is widely utilized for recovery of noble metals, recovery of nuclear fuel, waste water treatment and the like. As the ion absorption body, there have been known inorganic absorption bodies such as inorganic absorption zeolite, porous silica, porous carbon, etc., negative ion exchange resins, positive ion exchange resins, chelate resins, chelates, coagulants, and so on. In the separating and recovering method by use of an ion absorption body, in general, an ion containing a target element which is an element to be recovered is adsorbed from a solution onto the ion absorption body and is separated. In this case, if an impurity element or elements other than the target element is contained in the solution, the impurity elements would be adsorbed onto the ion absorption body similarly to the target element, whereby the performance of separation is lowered.

In view of this, in patent document 1, in order to separate platinum group elements as target elements and other impurity ions from each other, the oxidation-reduction potential of a chloride solution containing the platinum group elements and containing the impurity elements is changed, to thereby selectively adsorb the platinum group elements onto an ion exchange resin. In patent document 1, the oxidation-reduction potential of the chloride solution containing the platinum group elements is changed by addition of an oxidizing agent. By the oxidation-reduction potential of the solution, all the platinum group elements are converted into a tetravalent state in which they are liable to be converted into chloro-complexes. Since the chloro-complexes are high in selectivity in adsorption onto the ion exchange resin, the platinum group elements can be selectively adsorbed.

In patent document 2, a solution containing uranium as a target element and other impurity elements is reduced, whereby uranium is converted into a complex of negative ion of nitric acid, which is brought into contact with a negative ion exchange body. By converting uranium into the tetravalent state by reduction, the change of uranium into the nitric acid complex high in selectivity for the negative ion exchange resin is promoted, whereby the selectivity in adsorption onto the negative ion exchange body is enhanced.

### Citation List

### Patent Documents

Patent Document 1: JP-2004-131745-A
Patent Document 2: JP-2002-236195-A

### Non-Patent Document

Non-Patent Document 1: Marcel Pourbaix, "Atlas of Electrochemical Equilibria in Aqueous Solutions," published by National Association of Corrosion Engineers, 1974, pp. 234-241, 275 and 282

### Summary of the Invention

### Technical Problem to be solved by the Invention

In both of Patent Documents 1 and 2, the valence of the target element is changed, to thereby accelerate the formation of a complex ion that contains the target element. However, the polarity of the charge of the complex ion containing the target element after the valence of the target element is changed is coincident with that before the change in valence. Therefore, even if there is a difference in selectivity in adsorption, ions of the same polarity are adsorbed onto the ion absorption body. Where the concentration of the impurity elements is high, therefore, there is a possibility of a lowering in the performance of separation of the target element or increases in the amounts of agents and waste liquid.

The present invention provides an element separating method and an element separation system by which the amount of waste liquid can be reduced while maintaining the performance of separation of a target element.

### Means for Solving the Problem

In order to solve the above problem, an element separating method of the present invention includes (1) a first step of adjusting oxidation-reduction potential of a solution containing a target element to a potential at which polarity of only a chemical species containing the target element can be converted; and (2) a second step of introducing the oxidation-reduction potential-adjusted solution to an ion absorption body, and causing only either one of the polarity-converted chemical species containing the target element and a chemical species of an impurity element in the solution to be selectively adsorbed onto the ion absorption body, the target element being separated from the solution.

In addition, an element separation system of the present invention includes: (1) an oxidation-reduction potential adjustment device that introduces a solution containing a target element and adjusts oxidation-reduction potential of the solution in such a manner as to convert polarity of only a chemical species containing the target element; and (2) an ion adsorbing device that introduces the solution containing the polarity-converted chemical species containing the target element and selectively adsorbs only either one of the polarity-converted chemical species containing the target element and an impurity in the solution.

According to the present invention, an element separating method and an element separation system by which the amount of waste liquid can be reduced while maintaining the performance of separation of a target element can be provided.

Other problems, features and effects than the above-mentioned will be made clear by the following description of embodiments.

### Brief Description of the Drawings

FIG. 1 is a general block diagram of an element separation system according to an embodiment of the present invention;
FIG. 2 is a diagram showing a flow of steps performed by the element separation system shown in FIG. 1;
FIG. 3 is a schematic view of an oxidation-reduction potential adjustment device shown in FIG. 1;
FIG. 4 is another schematic view of the oxidation-reduction potential adjustment device shown in FIG. 1;
FIG. 5 is a diagram showing variations in absorption spectrum when oxidation-reduction potential is adjusted according to Embodiment 1 of the present invention;
FIG. 6 is a figure showing variations in absorption selectivity in Embodiment of the present invention and Comparative Example;
FIG. 7 is a diagram showing a model compound of an ion exchange resin used in Embodiment 2 of the present invention; and
FIG. 8 is a figure showing simulation results of absorption selectivity of each chemical species with respect to the model compound shown in FIG. 7.

### Modes for Carrying Out of the Invention

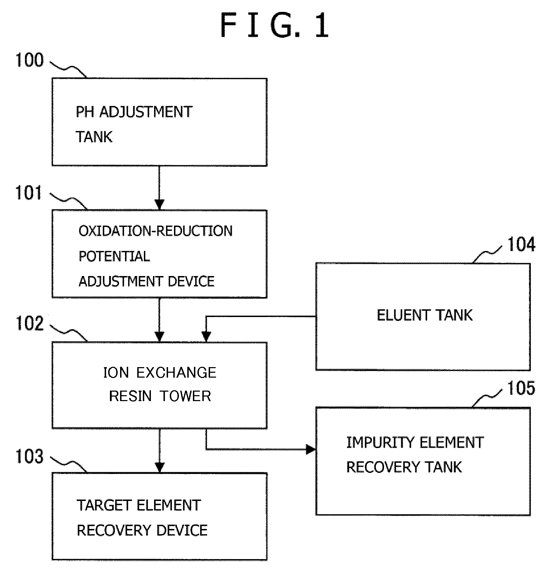

FIG. 1 shows a general block diagram of an element separation system according to an embodiment of the present invention. The element separation system includes a pH adjustment tank 100, an oxidation-reduction potential adjustment device 101, an ion exchange resin tower 102 functioning as an ion absorption body, a target element recovery device 103 for recovering a target element, an eluent tank 104 storing an eluent to be supplied to the ion exchange resin tower 102, and an impurity element recovery tank 105 for recovering the eluent containing an impurity element and flowing out from the ion exchange resin tower 102 by the supplied eluent, to thereby recover the impurity element.

The element separation system of the present invention is applicable to systems for separating a target element from a processing object according to various uses, such as, for example, phosphorus (P) contained in domestic waste water, uranium (U) contained in used nuclear fuel, catalyst material vanadium (V) contained in a used catalyst, etc. The element separation system can be applied to separation between a target element and an impurity element or elements as other elements, in such cases as a case of removing a specific element from a processing object and a case of separating and recovering a specific element from a processing object. Hereinafter, for convenience, description will be made while referring to the target element as M_{A}, and the impurity element as M_{B}.

The pH adjustment tank 100 is provided for varying, together with the oxidation-reduction potential adjustment device 101 which will be described later, the polarity of a chemical species of part of transition metal or semimetal elements contained in the processing object.

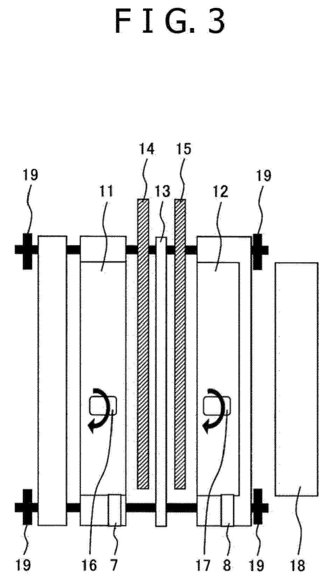

The oxidation-reduction potential adjustment device is illustrated in FIG. 3. As shown, the oxidation-reduction potential adjustment device 101 includes a negative electrode chamber 11 into which an aqueous solution containing a target element M_{A} and an impurity element M_{B} is introduced via an injection port 7; here, in the case where the processing object is a used catalyst, for example, the target element M_{A} is vanadium (V) and the impurity element M_{B} is tungsten (W). The device also includes: a positive electrode chamber 12 into which a sodium chloride (NaCl) solution, for example, is introduced via an injection port 8; and a mesh electrode 14 on the negative electrode chamber 11 side and a plate-shaped electrode 15 on the positive electrode 12 side which are arranged between the negative electrode chamber 11 and the positive electrode chamber, with a positive ion exchange membrane 13 sandwiched therebetween, these members being fixed by fixing means such as bolts 19. A magnetic type stirring element 16 is provided in the negative electrode chamber 11, while a magnetic type stirring element 17 is provided in the positive electrode chamber 12, and they are driven to rotate at desired revolving speeds by a stirrer 18, whereby the solution containing the target element M_{A} and the impurity element M_{B} and the sodium chloride solution, which are introduced respectively into the negative electrode chamber 11 and the positive electrode chamber 12, are stirred.

In this instance, the oxidation-reduction potential to be adjusted is adjusted in such a manner that the polarity of the chemical species containing the target element M_{A} is converted but the polarity of the chemical species containing the impurity element M_{B} is not converted. Namely, the oxidation-reduction potential adjustment device 101 functions in such a manner as to convert only the polarity of the chemical species containing the target element M_{A}. Note that in the present invention, the conversion of the polarity of a chemical species refers to a change between positive polarity and negative polarity, a change from a valence of 0 to a positive charge, or a change from a valence of 0 to a negative charge.

The ion exchange resin tower 102 is a tower which is provided therein with a column packed with an ion exchange resin and through which a solution adjusted by the oxidation-reduction potential adjustment device 101 is caused to flow from an upper portion or a lower portion thereof, whereby a desired ion or ions of those ions present in the solution are selectively adsorbed onto the ion exchange resin. Here, as the ion exchange resin, there is used one in which a positive ion of its own is released and positive ions present in the solution are adsorbed at an absorption (positive ion exchange body), one in which a negative ion of its own is released and negative ions present in the solution are adsorbed at an absorption part (negative ion exchange body), one in which a specific ion is selectively adsorbed by coordinate bond, or one which has a positive ion absorption part and a negative ion absorption part and in which neutral salts are adsorbed. Among them, the one in which the selective absorption of ion is performed by the coordinate bond has such a configuration that an unpaired electron of an element at the absorption part is given to an orbit present in the ion to be adsorbed, thereby forming a bond. In this way, as the ion exchange resin, there is used a positive ion exchange resin, a negative ion exchange resin, a chelate resin, a chelate, a coagulant or the like.

Into the ion exchange resin tower 102 is introduced the solution in which the polarity of only the chemical species containing the target element M_{A} has been changed by the oxidation-reduction potential adjustment device 101 as aforementioned, and only the chemical species containing the impurity element M_{B} not having been changed in polarity is adsorbed onto the ion exchange resin.

The target element recovery device 103 recovers the target element M_{A} by recovering the solution which flows out of the ion exchange resin tower 102 and which contains dissolved therein the chemical species containing the polarity-changed target element M_{A}.

The eluent tank 104 stores an eluent for separating the chemical species which contains the impurity element M_{B} and which has been selectively adsorbed onto the ion exchange resin in the ion exchange resin tower 102, from the ion exchange resin.

The impurity element recovery tank 105 has a configuration such that the chemical species containing the impurity element M_{B} and selectively adsorbed by the ion exchange resin is separated from the ion exchange resin by the eluent supplied from the eluent tank 104 to the ion exchange resin tower 102, and the eluent flowing out of the ion exchange resin tower 102 is recovered, whereby the impurity element M_{B} is recovered.

Note that in this embodiment, a configuration is adopted wherein only the chemical species containing the impurity element M_{B} dissolved in the solution without having its polarity changed by the oxidation-reduction potential adjustment device 101 is selectively adsorbed onto the ion exchange resin in the ion exchange resin tower 102, but this configuration is not restrictive. Namely, a configuration may be adopted wherein only the chemical species which contains the target element M_{A} and which has been changed in polarity by the oxidation-reduction potential adjustment device 101 is selectively adsorbed onto the ion exchange resin. In this case, the eluent stored in the eluent tank 104 has a property of eluting the chemical species containing the target element M_{A} from the ion exchange resin, and the eluent is supplied to the ion exchange resin tower 102, thereby to recover the target element M_{A}.

Now, a flow of steps for separating and recovering a target element and an impurity element from a processing object by the element separation system will be described.

In a pH adjustment step 1, pH of a solution containing a target element M_{A} and an impurity element M_{B} dissolved therein is adjusted, for example by addition of an acid, in such a manner that a suitable pH is obtained when the solution containing the target element M_{A} and the impurity element M_{B} dissolved therein is caused to flow through the ion exchange resin tower 102 in an ion absorption step 3, which is a treating step at a later stage. It is inferred that the solution after the pH adjustment is in such a state that the chemical species containing the target element M_{A} is dissolved in the solution as chemical species M_{AOx}⁻ in an oxidized state of having a negative-polarity charge, whereas the chemical species containing the impurity element M_{B} is dissolved in the solution as chemical species M_{BOx}⁻ in an oxidized state of having a negative-polarity charge.

In an oxidation-reduction potential adjustment step 2, an impressed voltage on the mesh electrode 14 disposed on the negative electrode chamber 11 side and the plate-shaped electrode 15 disposed on the positive electrode chamber 12 side in the oxidation-reduction potential adjustment device 101 shown in FIG. 3 is adjusted, whereby the chemical species M_{AOx} ⁻ containing the target element M_{A} is converted into a chemical species M_{ARED}⁺ in a reduced state of having a positive-polarity charge. On the other hand, the chemical species containing the impurity element M_{B} is dissolved in the solution as it is as chemical species M_{BOx}⁻ in the oxidized state of having the negative-polarity charge. That is, only the polarity of the chemical species containing the target element M_{A} is converted from negative to positive. Here, in the case where the target element M_{A} is vanadium (V) and the impurity element M_{B} is tungsten (W), for example, an oxoanion H₃V₂O₇- which is a vanadium-containing chemical species is converted into an oxocation VO⁺ which is a vanadium-containing chemical species. On the other hand, the polarity of the chemical species containing tungsten which is the impurity element remains unconverted, in other words, the chemical species remains as an oxoanion WO₄²⁻. Accordingly, only the polarity of the chemical species containing the target element M_{A} is converted.

Note that the oxidation-reduction potential adjustment step 2 may have a configuration wherein the oxidation-reduction potential is adjusted in such a manner that only the polarity of the chemical species containing the impurity element M_{B} is converted and the polarity of the chemical species containing the target element M_{A} is not converted.

A lot of verifications have already been made as to the conversion of the polarity of chemical species by pH adjustment or oxidation-reduction potential adjustment. For instance, non-patent document 1 shows examples of conversion of polarity from negative polarity to positive polarity, such as from H₂VO₄⁻ to VO⁺, from MnO₄²⁻ to MnOH⁺, and from CrO₄²⁻ to CrO⁺. In addition, examples of chemical species whose polarity is converted similarly further include from H₇O₁₃U₃⁻ to UO₂⁺, from TcO₄⁻ to TcO(OH)₂⁰, from H₂SeO₃⁰ to HSe⁻, and from H₂AsO₄⁻ to HAsO₂.

In this way, in the case of separating vanadium (V), manganese (Mn), chromium (Cr) or uranium (U) as the target element M_{A}, the polarity conversion is conversion from negative to positive by the oxidation-reduction potential adjustment. In addition, in the case of separating technetium (Tc), selenium (Se) or arsenic (As) as the target element M_{A}, the polarity conversion is conversion from a negative charge to a valence of 0 by the oxidation-reduction potential adjustment. As aforementioned, the conversion of polarity of a chemical species in the present invention is defined as a change between positive polarity and negative polarity, a change from a valence of 0 to a positive charge, or a change from a valence of 0 to a negative charge.

Examples of the element relevant to the conversion of charge polarity of a chemical species, including the aforementioned elements, include beryllium (Be), boron (B), carbon (C), nitrogen (N), fluorine (F), aluminum (Al), silicon (Si), phosphorus (P), sulfur (S), scandium (Sc), titanium (Ti), chromium (Cr), manganese (Mn), iron (Fe), cobalt (Co), nickel (Ni), copper (Cu), zinc (Zn), gallium (Ga), germanium (Ge), arsenic (As), selenium (Se), bromine (Br), yttrium (Y), zirconium (Zr), niobium (Nb), technetium (Tc), ruthenium (Ru), rhodium (Rh), palladium (Pd), silver (Ag), cadmium (Cd), indium (In), tin (Sn), antimony (Sb), tellurium (Te), iodine (I), lanthanum (La), cesium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), lutetium (Lu), hafnium (Hf), tantalum (Ta), rhenium (Re), osmium (Os), iridium (Ir), platinum (Pt), gold (Au), mercury (Hg), thallium (Tl), lead (Pb), bismuth (Bi), polonium (Po), actinium (Ac), protactinium (Pa), uranium (U), neptunium (Np), plutonium (Pu), americium (Am), curium (Cm), einsteinium (Es), fermium (Fm), mendelevium (Md), nobelium (No), lawrencium (Lr), etc.

Therefore, by converting the polarity of a chemical species containing the target element M_{A} by the oxidation-reduction potential adjustment device 101 of the present invention, many elements can be separated. For example, in the case of the elements contained in the above-mentioned used nuclear fuel, not only uranium (U) but also technetium (Tc) and iodine (I) which are long-lived fission products (FP) and, further, minor actinides (MA) such as neptunium (Np), americium (Am) and curium (Cm) which are long-lived radioactive elements can be selectively adsorbed and separated.

As aforementioned, in the oxidation-reduction potential adjustment step 2, the impurity element M_{B} is kept as it is in the form of chemical species M_{Box}⁻. Note that here, for preventing the polarity-converted chemical species M_{ARED}⁺ containing the target element from returning again to the state M_{AOX}⁻ before polarity conversion, at the time of impressing a voltage on the mesh electrode 14 and the plate-shaped electrode 15, the ion exchange membrane 13 is disposed between the mesh electrode 14 and the plate-shaped electrode 15 in the oxidation-reduction potential adjustment device 101 shown in FIG. 3. Note that a configuration may be adopted wherein a semipermeable membrane is provided in place of the ion exchange membrane 13 between the mesh electrode 14 and the plate-shaped electrode 15.

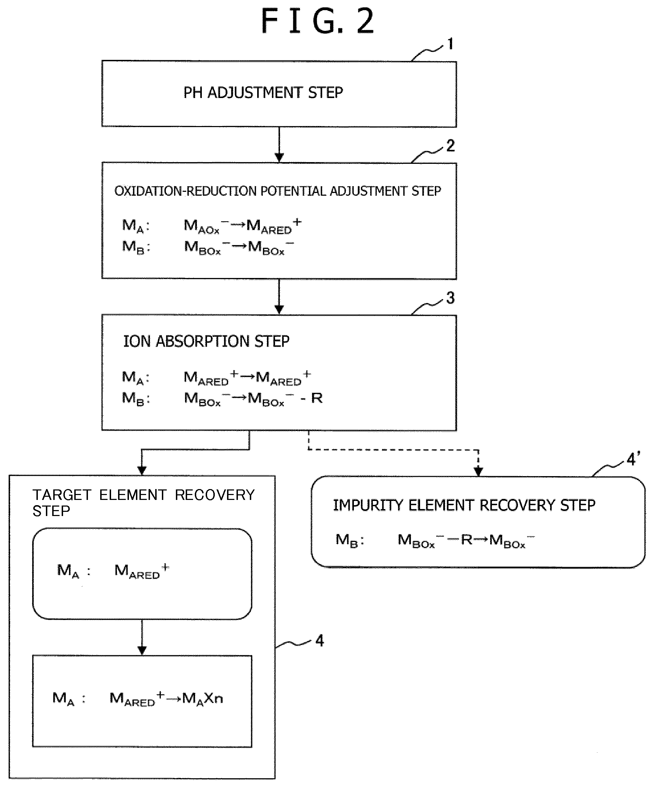

In the ion absorption step 3, the solution containing the polarity-converted chemical species M_{ARED}⁺ of the target element and the not-polarity-converted chemical species M_{BOX}⁻ of the impurity element, obtained by the oxidation-reduction potential adjustment step 2, is introduced into the ion exchange resin tower 102. By using, for example, a negative ion exchange body as the ion exchange resin in the ion exchange resin tower 102, only the chemical species M_{BOX}⁻ containing the impurity element is adsorbed from the solution flowing through the ion exchange resin tower 102, whereas the chemical species M_{ARED}⁺ containing the target element flows out of the ion exchange resin tower 102 without being adsorbed onto the ion exchange resin. In Fig. 2, R represents the ion exchange resin. Here, in the case where, for example, the target element M_{A} here is vanadium (V) and the impurity element M_{B} is tungsten (W), the chemical species containing vanadium as the target element which is converted in chemical species polarity from oxoanion H₃V₂O₇⁻ to oxocation VO⁺ by the oxidation-reduction potential adjustment step flows out of the ion exchange resin tower 102 without being adsorbed onto the ion exchange resin. On the other hand, the chemical species containing the tungsten as the impurity element which is not converted in chemical species polarity but remains as oxoanion WO₄²⁻ is adsorbed onto the ion exchange resin which is the negative ion exchange body.

Note that when a positive ion exchange body is used as the ion exchange resin, the chemical species containing vanadium as the target element which is converted to oxocation VO⁺ can be adsorbed onto the ion exchange resin. Besides, in this instance, the chemical species containing tungsten as the impurity element which is not converted but remains as oxoanion WO₄²⁻ flows out of the ion exchange resin tower 102 without being adsorbed onto the ion exchange resin.

In the target element recovery step 4, the solution containing the chemical species M_{ARED}⁺ which contains the target element and flows out without being adsorbed onto the ion exchange resin functioning as the ion exchange body is introduced into the target element recovery device 103, and M_{A}Xₙ is recovered as a solid salt or the like.

Besides, in an impurity element recovery step 4', the eluent stored in the eluent tank 104 is supplied into the ion exchange resin tower 102 by a pump which is not illustrated, the chemical species M_{BOX}⁻ containing the impurity element that is adsorbed onto the ion exchange resin is eluted, and is recovered into the impurity element recovery tank 105. Here, where for example the target element M_{A} is vanadium (V) and the impurity element M_{B} is tungsten (W), an aqueous ammonium chloride (NH₄Cl) solution, for example, may be used as the eluent. By supplying the aqueous ammonium chloride solution to the ion exchange resin tower 102 by a pump which is not illustrated, the oxoanion WO₄²⁻ adsorbed onto the ion exchange resin can be eluted from the ion exchange resin, and, by addition of an agent, tungsten can be recovered as a solid salt.

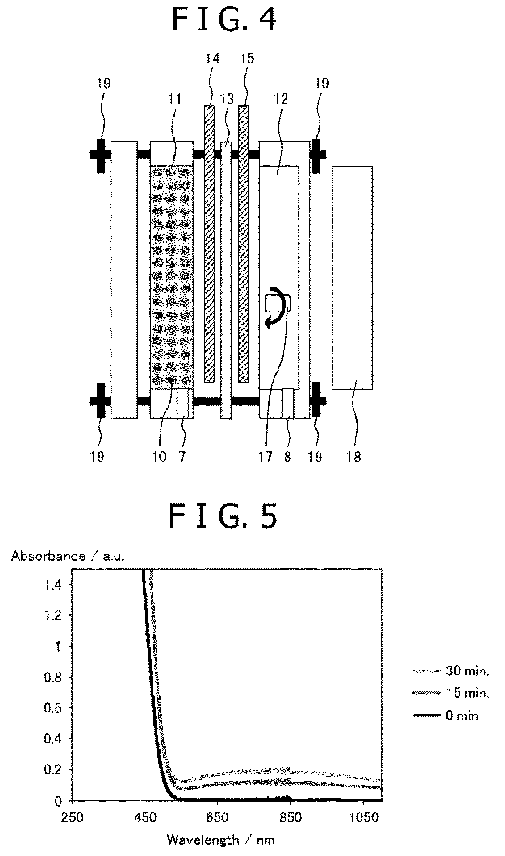

FIG. 4 shows another configuration example of the oxidation-reduction potential adjustment device depicted in FIG. 1. The same components as those in FIG. 3 are denoted by the same reference symbols as in FIG. 3. The oxidation-reduction potential adjustment device 101 shown in FIG. 4 differs from the oxidation-reduction potential adjustment device shown in FIG. 3 in that a negative electrode chamber 11 is packed therein with an ion exchange resin 10.

In the oxidation-reduction potential adjustment device 101 shown in FIG. 4, an aqueous solution containing a target element M_{A} and an impurity element M_{B} is introduced into the negative electrode chamber 11 via an injection port 7. Here, in the case where the target element M_{A} is vanadium (V) and the impurity element M_{B} is tungsten (W), the aqueous solution containing dissolved therein the oxoanion H₃V₂O₇⁻ as vanadium-containing chemical species and oxoanion WO₄²⁻ as tungsten-containing chemical species is introduced into the negative electrode chamber 11, as aforementioned. In addition, the aqueous sodium chloride solution introduced into a positive electrode chamber 12 via an injection port 8 is stirred at a predetermined stirring speed by a stirring element 17, like in FIG. 3. Here, although the negative electrode chamber 11 is not provided therein with the stirring element 16 shown in FIG. 3, potentials are applied to the aqueous solution containing the target element and the impurity element in the negative electrode chamber 11 and to the aqueous sodium chloride solution in the positive electrode chamber 12 through a mesh electrode 14 and a plate-shaped electrode 15, respectively, whereby potential adjustment is performed.

By the potential adjustment, in the negative electrode chamber 11, the oxoanion H₃V₂O₇⁻ as the vanadium-containing chemical species is converted in chemical species potential to oxocation VO⁺, whereas the oxoanion WO₄²⁻ as the tungsten-containing chemical species remains dissolved without undergoing polarity conversion.

In addition, the negative electrode chamber 11 is packed therein with the ion exchange resin 10 which is the negative ion exchange body. The ion exchange resin 10 releases its own negative ion into the solution in the negative electrode chamber 11, and adsorbs thereon the negative ions present in the solution. Specifically, the oxoanion WO₄²⁻ in the aqueous solution is adsorbed onto the ion exchange resin 10, whereas the oxocation VO⁺ as the vanadium-containing chemical species remains dissolved in the solution without being adsorbed onto the ion exchange resin 10.

Therefore, in the oxidation-reduction potential adjustment device 101 shown in FIG. 4, the conversion of polarity of the vanadium-containing chemical species and the absorption of the tungsten-containing chemical species onto the ion exchange resin 10 are performed in the negative electrode chamber 11. By use of the oxidation-reduction potential adjustment device 101 illustrated in FIG. 4, it is possible to eliminate the need for the ion exchange resin tower 102.

In this embodiment, in the ion absorption step 3, only the chemical species M_{BOX}⁻ which contains the impurity element and has not undergone polarity conversion is adsorbed onto the ion exchange resin, as aforementioned. This configuration, however, is not restrictive, and there may be adopted a configuration wherein only the polarity-converted chemical species M_{ARED}⁺ is adsorbed. In this case, it is sufficient to use a positive ion exchange body as the ion exchange resin in the ion exchange resin tower 102.

Besides, while the oxidation-reduction potential adjustment step 2 has been described by showing as an example the case where the oxidation-reduction potential is adjusted in such a manner as to covert the polarity of the chemical species containing the target element M_{A}, this is not restrictive. Another configuration may be adopted wherein the polarity of the chemical species containing the impurity element M_{B} is converted.

Embodiments of the present invention will be described below.

### Embodiment 1

In this embodiment, description will be made by showing as an example the case where the target element M_{A} is vanadium (V) and the impurity element M_{B} is tungsten (W).

A vanadium (V)-tungsten (W) mixed solution was prepared, and the pH of the mixed solution was adjusted to 7. As the oxidation-reduction potential adjustment device 101, the configuration shown in FIG. 3 above was used. The aqueous sodium chloride solution to be introduced into the positive electrode chamber 12 via the injection port 8 was a 10 wt.% NaCl solution. The vanadium-tungsten mixed liquid having been adjusted to pH 7 was introduced into the negative electrode chamber 11 via the injection port 7. The oxidation-reduction potential of the solution was changed by the mesh electrode 14 and the plate-shaped electrode 15, whereby the vanadium-containing chemical species in the mixed solution was changed from oxoanion H₃V₂O₇⁻ to oxocation VO⁺. Experimental conditions and results will be described below.

First, 200 g of a 10 wt.% aqueous sodium hydroxide solution was mixed with 3.4 g of weighed simulated catalyst powder, followed by stirring for 2 hours. The simulated catalyst powder contains 1.1 g of vanadium (V) and 1.1 g of tungsten (W). The stirred mixture was transferred into an alumina-made evaporating dish, and dried at 80 to 100°C for 15 hours. After sufficient drying, a mixed alkali hydroxide and the catalyst component were uniformly mixed by use of a grinding machine or the like, and the resulting powder was subjected to a heating treatment in atmospheric air at 250°C for 5 hours. After the heating treatment, 20 L of water was added to the powder, followed by stirring for 3 hours, to obtain a mixed solution in which vanadium and tungsten in the simulated catalyst powder were dissolved as oxoanions of H₃V₂O₇⁻ and WO₄²⁻, respectively. In this instance, the pH of the mixed solution was 14. This mixed solution was mixed with 37 wt.% solution of hydrochloric acid, to adjust the solution to pH 7.

Thereafter, the vanadium-containing chemical species and the tungsten-containing chemical species were changed by use of the oxidation-reduction potential adjustment device 101 shown in FIG. 3. The positive electrode chamber 12 was charged with 15 ml of a 10% NaCl solution via the injection port 8, and the negative electrode chamber 11 was charged with the vanadium-tungsten mixed solution adjusted to pH 7 via the injection port 7. As the positive ion exchange membrane 13 disposed between the positive electrode chamber 12 and the negative electrode chamber 11, Nafion (DuPont's trade mark) was used. During when a voltage was impressed on the mesh electrode 14 and the plate-shaped electrode 15, rotational stirring by the stirring elements 16 and 17 disposed respectively in the positive electrode chamber 12 and the negative electrode chamber 11 and the stirrer 18 was conducted. The voltage was 1 V and was impressed for 30 minutes.

After the voltage was impressed for 0 minutes, 15 minutes and 30 minutes, the vanadium-tungsten mixed solution was sampled from the negative electrode chamber 11, then diluted with water by a factor of 10, and put to measurement of absorbance. The absorption spectra thus measured are shown in FIG. 5. A very gentle absorption peak observed at a wavelength of 800 nm increased with the lapse of time, part of the chemical species of vanadium in the mixed solution had been changing.

After the voltage was impressed for 30 minutes, 5 ml of the vanadium-tungsten mixed solution at that moment was taken out from the negative electrode chamber 11, mixed with 5 ml of an ion exchange resin (SA-10, manufactured by Mitsubishi Chemical Corporation), and the resulting mixture was stirred moderately for 15 minutes, to adsorb vanadium and tungsten on the ion exchange resin. As a comparison, 5 ml of a mixed solution adjusted to the same pH as the pH after impressing of the voltage was sampled, was mixed with 5 ml of the ion exchange resin, and the resulting mixture was stirred moderately for 15 minutes. Note that a strongly basic negative ion exchange resin was used as an example of the ion exchange resin, the kind of the ion exchange resin is not limited to this one.

After the adsorption of tungsten and vanadium, the ion exchange resin was separated, and the concentrations of vanadium and tungsten in the mixed solution were measured by an ICP-AES apparatus. In this experiment, as the ICP-AES apparatus, there was used SPS3500DD manufactured by SII Nano Technology Inc.

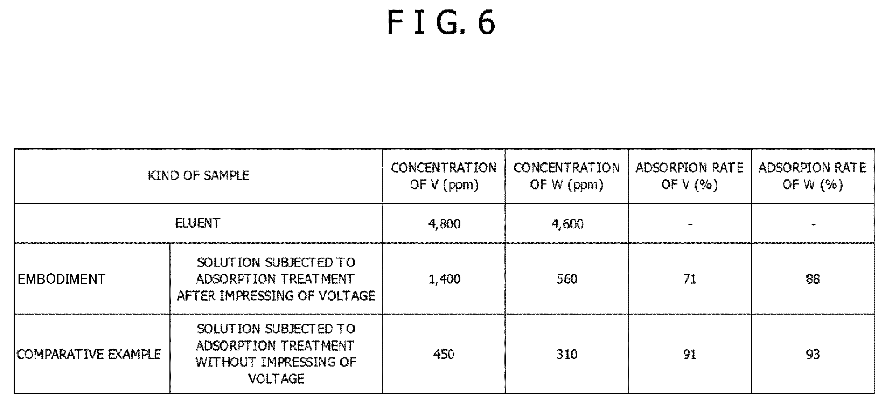

FIG. 6 shows the concentrations of vanadium and tungsten in the solution after separation of the ion exchange resin, in the case where the adsorption treatment was conducted after impressing of the voltage as Embodiment of the present invention and in the case where adsorption was conducted without impressing of a voltage as Comparative Example. The concentration of vanadium in the mixed solution was 4,800 ppm, and the concentration of tungsten was 4,600 ppm.

In the solution subjected to the adsorption treatment after impressing of the voltage in the Embodiment, the vanadium concentration was 1,400 ppm and the tungsten concentration was 560 ppm. In the Comparative Example, the vanadium concentration was 450 ppm and the tungsten concentration was 310 ppm. Thus, it was confirmed that in the Comparative Example, the adsorption rate of tungsten was 91% and the adsorption rate of vanadium was 93%; Namely, the adsorption rates for vanadium and tungsten were both about 90%, and no adsorption selectivity was observed.

In the Embodiment of the present invention, on the other hand, the adsorption rate of vanadium was 71% and the adsorption rate of tungsten was 88%; thus, only the vanadium adsorption rate was at a low value, and the presence of adsorption selectivity was confirmed. Accordingly, it was verified that by impressing a voltage, the vanadium adsorption rate can be lowered.

Specifically, it was confirmed that adsorption selectivity in the ion absorption step is obtained by the method wherein only the polarity of the chemical species containing vanadium as the target element is converted from oxoanion H₃V₂O₇⁻ to oxocation VO⁺ by the oxidation-reduction potential adjustment whereas the polarity of the chemical species containing tungsten as the impurity element is not converted but is kept as oxoanion WO₄²⁻.

### Embodiment 2

In this Embodiment, variations in selectivity of adsorption on an ion absorption body were calculated by simulation, for the cases where the target element M_{A} was vanadium (V), chromium (Cr), arsenic (As) and manganese (Mn) and where the chemical species of the target element M_{A} was changed by impressing a voltage. The simulation was carried out by use of MOPAC (Molecular Orbital PACage, ver. 9.03 CS).

In view of a terminal group contributing to ion exchange on a negative ion exchange resin, a structure as shown in FIG. 6 was adopted as a model compound, was adopted as a model compound 21 of each ion exchange body, and variations in enthalpy of formation and variations in entropy across each ion adsorption were calculated.

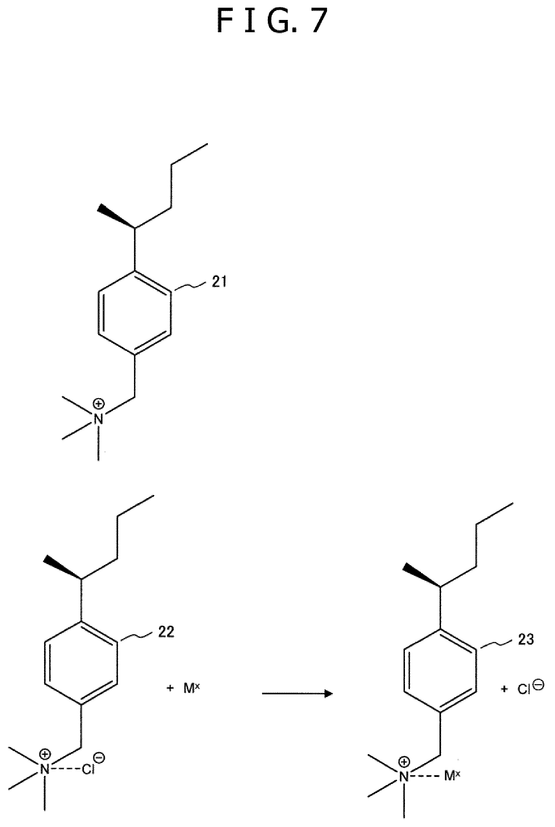

In FIG. 7, M^{x} is the chemical species containing the target element M_{A}, for example, oxoanion H₃V₂O₇⁻ as vanadium-containing chemical species, oxocation VO⁺ as vanadium-containing chemical species, oxocation CrO⁺ as chromium-containing chemical species, oxoanion CrO₄²⁻ as chromium-containing chemical species, oxoanion H₂AsO₄⁻ as arsenic-containing chemical species, HAsO₂ as arsenic-containing chemical species, oxoanion MnO₄²⁻ as manganese-containing chemical species, or oxocation MnOH⁺ as manganese-containing chemical species.

As a calculation model, there was used PM (Parameterization Model) 6 by which transition metal complexes can be calculated. Note that in view of that this reaction is a reaction taking place in an aqueous solution, the structure was optimized assuming a state wherein six water molecules are arranged in such a manner as to surround the model compound 21, before calculation of energy. The state at the left side in the lower part of FIG. 7 represents the model compound 22 before ion absorption, and the state at the right side in the lower part of FIG. 7 represents the model compound 23 after ion absorption.

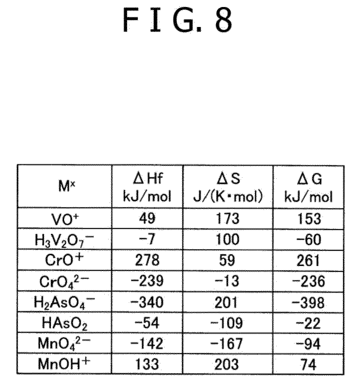

The enthalpy-of-formation variation ΔHf, entropy variation ΔS, and Gibbs free energy ΔG calculated from these numerical values, across each ion absorption, are set forth in FIG. 8. When the Gibbs free energy ΔG has a negative value, the reaction proceeds spontaneously, and as the absolute value of the negative value is greater, the reaction with the ion exchange resin is more predominant.

From the Gibbs free energy ΔG shown in FIG. 8, it is seen that the oxoanion H₃V₂O₇⁻ as the vanadium-containing chemical species, the oxoanion CrO₄²⁻ as the chromium-containing chemical species, the oxoanion H₂AsO₄⁻ as the arsenic-containing chemical species, HAsO₂ as the arsenic-containing chemical species, and the oxoanion MnO₄²⁻ as the manganese-containing chemical species are adsorbed on the negative ion exchange resin.

However, when the vanadium-containing chemical species undergoes conversion of polarity of chemical species from the oxoanion H₃V₂O₇- to the oxocation VO⁺, the bonding force for bonding to the ion exchange resin is lowered conspicuously. Similarly, when the chromium-containing chemical species undergoes conversion of polarity of chemical species from the oxoanion CrO₄²⁻ to the oxocation CrO⁺, the bonding force for bonding to the ion exchange resin is markedly lowered. The same applies to the case where the manganese-containing chemical species undergoes conversion of polarity of chemical species from the oxoanion MnO₄²⁻ to the oxocation MnOH⁺.

In addition, in the case where the oxoanion H₂AsO₄⁻ as the arsenic-containing chemical species is converted to HAsO₂ which is an arsenic-containing chemical species having a valence of 0, it is seen that although the Gibbs free energy ΔG shows a negative value, the value is reduced to 5%.

From this, it is seen that when the polarity of a chemical species containing the target element M_{A} is reversed between negative polarity and positive polarity, the reaction with the ion exchange resin does not proceed spontaneously, so that the chemical species is not adsorbed on the ion exchange resin. Besides, in the case where the polarity of the chemical species is not reversed between negative polarity and positive polarity and the polarity is changed from a negative charge to a valence of 0, as in the case of the change of the chemical species of arsenic as the target element M_{A}, namely, in the case of conversion from H₂AsO₄⁻ to HAsO₂, the presence/absence of adsorbability onto the ion exchange body is not changed but the strength of selectivity is varied largely. This is due to the lowering in Gibbs free energy to about 5%.

From the foregoing, it has been shown that by changing the polarity of charge of the chemical species containing a target element M_{A}, the selectivity as to adsorption of the chemical species onto an ion exchange body can be varied largely.

Note that the present invention is not to be limited to the above-described Examples, but includes various modifications. For instance, the above Embodiments have been described in detail for explaining the present invention in an easily understandable manner, and the present invention may not necessarily have all the constituent features described above. In addition, part of the constitution of an Embodiment can be replaced by a constituent feature or features of another Embodiment, and, besides, to the constitution of an Embodiment can be added a constituent feature or features of another Embodiment. Further, with respect to part of the constitution of each Embodiment, addition, omission or substitution of a constituent feature or features of another Embodiment can be applied.

### Reference Signs List

- 1:: pH adjustment step
- 2:: Oxidation-reduction potential adjustment step
- 3:: Ion absorption step
- 4:: Target element recovery step
- 4':: Impurity element recovery step
- 7, 8:: Injection port
- 11:: Negative electrode chamber
- 12:: Positive electrode chamber
- 13:: Ion exchange membrane
- 14:: Mesh electrode
- 15:: Plate-shaped electrode
- 16, 17:: Stirring element
- 18:: Stirrer
- 100:: pH adjustment tank
- 101:: Oxidation-reduction potential adjustment device
- 102:: Ion exchange resin tower
- 103:: Target element recovery device
- 104:: Eluent tank
- 105:: Impurity element recovery tank

## Claims

1. An element separating method comprising the steps of:
a first step of adjusting oxidation-reduction potential of a solution containing a target element to a potential at which polarity of only a chemical species containing the target element can be converted; and
a second step of introducing the oxidation-reduction potential-adjusted solution to an ion absorption body, and causing only either one of the polarity-converted chemical species containing the target element and a chemical species of an impurity element in the solution to be selectively adsorbed onto the ion absorption body,
wherein the target element is separated from the solution.

2. An element separating method comprising the steps of:
a first step of adjusting oxidation-reduction potential of a solution containing a target element to a potential at which polarity of only a chemical species containing an impurity element contained in the solution can be converted; and
a second step of introducing the oxidation-reduction potential-adjusted solution to an ion absorption body, and causing either one of the polarity-converted chemical species containing the impurity element and a chemical species containing the target element to be selectively adsorbed onto the ion absorption body,
wherein the target element is separated from the solution.

3. The element separating method according to claim 1 or 2,
wherein the conversion of the polarity of the chemical species in the first step is a change between positive polarity and negative polarity, a change from a valence of 0 to a positive charge, or a change from a valence of 0 to a negative charge.

4. The element separating method according to claim 3, further comprising the step of:
a step of causing an eluent to flow when the chemical species containing the target element or the polarity-converted chemical species containing the target element is adsorbed on the ion absorption body, whereby to separate and recover the chemical species containing the target element or the polarity-converted chemical species containing the target element that is adsorbed on the ion absorption body.

5. The element separating method according to claim 3, further comprising the step of:
a step of measuring pH of the solution containing the target element, and adjusting the pH of the solution to a predetermined pH on the basis of measurement results, before the first step.

6. An element separation system comprising:
an oxidation-reduction potential adjustment device that introduces a solution containing a target element and adjusts oxidation-reduction potential of the solution in such a manner as to convert polarity of only a chemical species containing the target element; and
an ion absorption device that introduces the solution containing the polarity-converted chemical species containing the target element and selectively adsorbs only either one of the polarity-converted chemical species containing the target element and an impurity in the solution.

7. The element separation device according to claim 6,
wherein the conversion of the polarity of the chemical species containing the target element is a change between positive polarity and negative polarity, a change from a valence of 0 to a positive charge, or a change from a valence of 0 to a negative charge.

8. The element separation system according to claim 7,
wherein the ion absorption device is an inon absorption tower packed therein with an ion absorption resin that adsorbs positive ions or negative ions.

9. The element separation system according to claim 7, comprising:
a target element recovering unit that causes an eluent to flow through an ion absorption part, whereby to separate and recover the polarity-converted species containing the target element that is adsorbed on the ion absorption part.
Amended claim 1 contains the constituent element of "by adjusting an impressed voltage on electrodes" added to the original Claim 1. Amended claim 2 contains the constituent element of "by adjusting an impressed voltage on electrodes" added to the original claim 2. Amended claim 6 contains the constituent element of "by adjusting an impressed voltage on electrodes" added to original claim 6. The expression "The element separation device ..., wherein ..." described in the original claim 7 has been rewritten to "The element separation system ..., wherein ..." in amended claim 7. The expression "an inon absorption tower" described in original claim 8 has been rewritten to "an ion absorption tower" in amended claim 8.
The present invention according to claims 1 to 9 after the amendment is considered to possess both novelty and inventiveness.

## Amended claims

### Amended claims under Art. 19.1 PCT

**1.** (Amended) An element separating method comprising the steps of:
a first step of adjusting oxidation-reduction potential of a solution containing a target element to a potential at which polarity of only a chemical species containing the target element can be converted, by adjusting an impressed voltage on electrodes; and
a second step of introducing the oxidation-reduction potential-adjusted solution to an ion absorption body, and causing only either one of the polarity-converted chemical species containing the target element and a chemical species of an impurity element in the solution to be selectively adsorbed onto the ion absorption body,
wherein the target element is separated from the solution.

**2.** (Amended) An element separating method comprising the steps of:
a first step of adjusting oxidation-reduction potential of a solution containing a target element to a potential at which polarity of only a chemical species containing an impurity element contained in the solution can be converted, by adjusting an impressed voltage on electrodes; and
a second step of introducing the oxidation-reduction potential-adjusted solution to an ion absorption body, and causing either one of the polarity-converted chemical species containing the impurity element and a chemical species containing the target element to be selectively adsorbed onto the ion absorption body,
wherein the target element is separated from the solution.

**3.** The element separating method according to claim 1 or 2,
wherein the conversion of the polarity of the chemical species in the first step is a change between positive polarity and negative polarity, a change from a valence of 0 to a positive charge, or a change from a valence of 0 to a negative charge.

**4.** The element separating method according to claim 3, further comprising the step of:
a step of causing an eluent to flow when the chemical species containing the target element or the polarity-converted chemical species containing the target element is adsorbed on the ion absorption body, whereby to separate and recover the chemical species containing the target element or the polarity-converted chemical species containing the target element that is adsorbed on the ion absorption body.

**5.** The element separating method according to claim 3, further comprising the step of:
a step of measuring pH of the solution containing the target element, and adjusting the pH of the solution to a predetermined pH on the basis of measurement results, before the first step.

**6.** (Amended) An element separation system comprising:
an oxidation-reduction potential adjustment device that introduces a solution containing a target element and adjusts oxidation-reduction potential of the solution in such a manner as to convert polarity of only a chemical species containing the target element, by adjusting an impressed voltage on electrodes; and
an ion absorption device that introduces the solution containing the polarity-converted chemical species containing the target element and selectively adsorbs only either one of the polarity-converted chemical species containing the target element and an impurity in the solution.

**7.** (Amended) The element separation system according to claim 6,
wherein the conversion of the polarity of the chemical species containing the target element is a change between positive polarity and negatively polarity, a change from a valence of 0 to a positive charge, or a change from a valence of 0 to a negative charge.

**8.** (Amended) The element separation system according to claim 7, wherein the ion absorption device is an ion absorption tower packed therein with an ion absorption resin that adsorbs positive ions or negative ions.

**9.** The element separation system according to claim 7, comprising:
a target element recovering unit that causes an eluent to flow through an ion absorption part,whereby to separate and recover the polarity-converted species containing the target element that is adsorbed on the ion absorption part.
